Europäisches Patentamt

European Patent Office

Office européen des brevets

(11) Veröffentlichungsnummer: **0 175 842**

**A1**

(12) **EUROPÄISCHE PATENTANMELDUNG**

(21) Anmeldenummer: 85106756.1

(22) Anmeldetag: 31.05.85

(51) Int. Cl.⁴: **G 11 B 15/16**

(30) Priorität: 28.09.84 DE 3435683

(43) Veröffentlichungstag der Anmeldung:
02.04.86 Patentblatt 86/14

(84) Benannte Vertragsstaaten:
DE FR GB IT

(71) Anmelder: GRUNDIG E.M.V. Elektro-Mechanische
Versuchsanstalt Max Grundig
Kurgartenstrasse 37
D-8510 Fürth(DE)

(72) Erfinder: Schulze, Jürgen, Ing.grad.
Hesselbergring 15
D-8500 Nürnberg(DE)

(54) **Vorrichtung zum Abtasten einer Kassette.**

(57) Es wird eine Vorrichtung in einem Kassettengerät beschrieben, die das unbeabsichtigte Löschen eines in einer Kassette enthaltenen Magnetbandes verhindert. Ein zum Abtasten der Kassette erforderlicher Winkelhebel (3) wird so mit einem Schieber (12) eines Drucktastenaggregats in Wirkverbindung gebracht, daß der Winkelhebel (3), auf den keine Federkraft einwirkt, in Abhängigkeit einer Vertiefung in der Kassette den Schieber (12) zu sperren vermag.

FIG. 3

EP 0 175 842 A1

/
- 1 -

# VORRICHTUNG ZUM ABTASTEN EINER KASSETTE

## BESCHREIBUNG

Die Erfindung betrifft eine Vorrichtung um das unbeabsichtigte Löschen eines Magnetbandes in einer Kassette beim Betreiben in einem Kassettengerät zu verhindern.

Es ist bekannt, daß Kassetten-Tonbandgeräte mit Einrichtungen versehen sind, die ein unbeabsichtigtes Löschen eines in einer Kassette enthaltenen Magnetbandes beim Betreiben in einem Kassettengerät in Abhängigkeit von in der Kassette eingebrachte Vertiefungen verhindern.

Aus der DE-PS 24 13 735 ist ein Kassetten-Tonbandgerät bekannt, das eine entsprechende Einrichtung aufweist, um das unbeabsichtigte Löschen eines in einer Kassette enthaltenen Magnetbandes zu verhindern. Hierzu tasten zwei Abtasthebel die bedarfsweise in der Kassette eingebrachten Vertiefungen ab. Auf den Abtasthebel wirkt eine Zugfeder ein und mehrere Kipphebel sind nachgeschaltet, um die Verbindung zu dem das Gerät steuernden Betätigungshebel herzustellen. Eine derartig ausgeführte Einrichtung ist aufwendig und für kostengünstige Geräte weniger geeignet. Es ist auch bekannt, die Abtasthebel aus Kunststoff zu fertigen, und die auf dem Abtasthebel einwirkende Feder einstückig mit an den Abtasthebel aus Kunststoff anzuspritzen. Eine derartige Ausführung ist zwar kostengünstig, doch hat sie den Nachteil, daß die Feder insbesondere durch Temperatureinfluß erlahmt, und der Abtasthebel in seiner Funktionsausübung gehindert ist.

Aufgabe der Erfindung ist es daher, eine einfache Vorrichtung zu schaffen, die das unbeabsichtigte Löschen eines in einer Kassette enthaltenen Magnetbandes verhindert, wobei die hierfür erforderlichen Teile möglichst einfach und aus Kunststoff zu fertigen sein sollten und es soll keine Rückstellkraft (Federkraft) ständig auf den Kassetten-Abtasthebel einwirken.

Diese Aufgabe wird gemäß der Erfindung durch die Merkmale des Anspruchs 1 gelöst.

Die Erfindung wird nachfolgend anhand der Zeichnungen näher erläutert.

Fig. 1    ist eine Darstellung der erfindungswesentlichsten Teile einer Vorrichtung, um das unbeabsichtigte Löschen eines in einer Kassette befindlichen Magnetbandes zu verhindern,

Fig. 2    ist eine schematische Darstellung ähnlich der Fig. 1, wobei die Vorrichtungsteile in der das Löschen des Bandes verhindernder Lage gezeichnet sind,und

Fig. 3    ist eine perspektivische Darstellung nur der erfindungswesentlichsten Einzelteile.

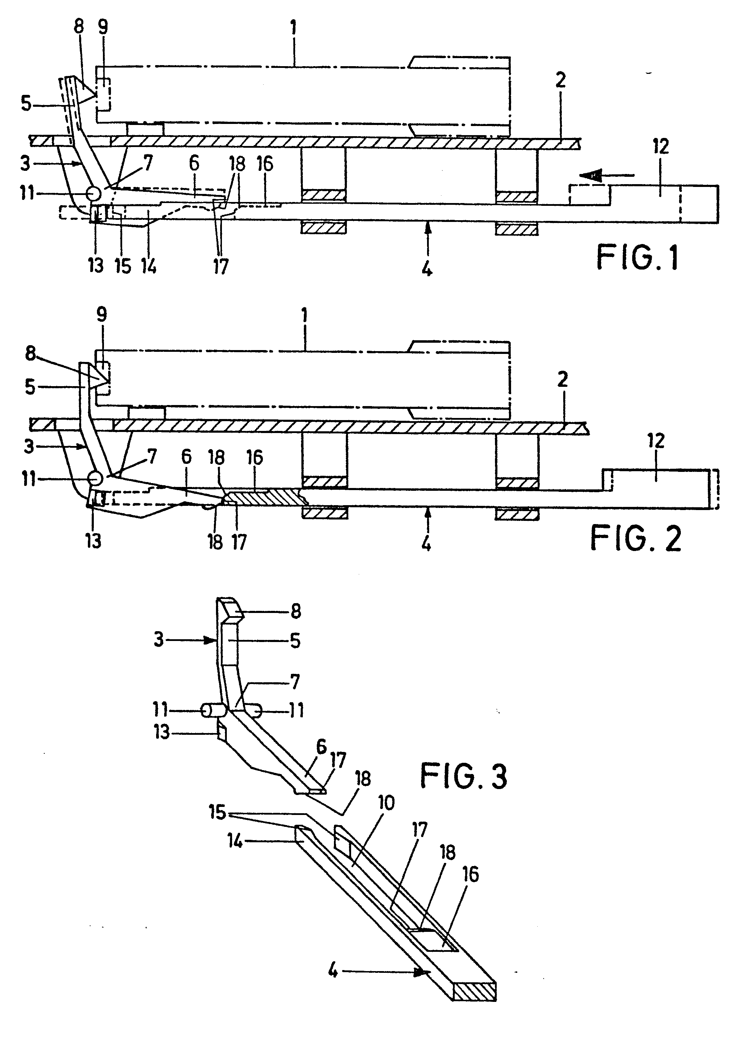

Aus der Figur 1 ist aus einer schematisch dargestellten Zeichnung ersichtlich, wie eine strichpunktiert dargestellte Kassette 1 auf einem angedeuteten Gerätechassis 2 aufliegt, und ein Winkelhebel 3 im Zusammenwirken mit einem Schieber 4 die Kassettenrückseite im Sinne einer Aufnahmesperre abtastet. Der Winkelhebel besteht hierfür aus zwei möglichst gleich langen Schenkeln 5, 6 und ist mittig zum Winkelteil 7 schwenkbar im Chassis 2 gelagert. Der obere Schenkel 5 des Winkelteils weist an seinem Ende eine Nase 8 auf, über die eine Vertiefung 9 in der Kassette abgetastet wird. Ist die Vertiefung 9 der Kassette durch einen entsprechenden Abdecksteg verschlossen (siehe Fig. 1), so kann das Magnetband in der Kassette während des Gerätebetriebes gelöscht werden bzw. eine Eigenaufzeichnung auf das Magnetband über das Gerät ist möglich. Sofern die Vertiefung 9 der Nase 8 des Winkelhebels 3 zugänglich ist, kann die Kassette nicht unbeabsichtigt gelöscht werden. Der untere Schenkel 6 des Winkelhebels greift dann durch zwangsläufiges Verschwenken in eine schlitzförmige Öffnung 10 (siehe Fig. 3) des Schiebers 4 ein. Der Winkelhebel 3 weist beidseitig je einen Lagerzapfen 11 auf, die zur Lagerung des Winkelhebels im Gerätechassis 2 dienen. Der Schieber 4 zeigt weiterhin einen Betätigungsknopf 12. Wird der Schieber nach Fig. 1 in Pfeilrichtung betätigt und in die gestrichelt angedeutete Lage gebracht, so ist bei fehlender Vertiefung 9 in der Kassette der Winkelhebel nicht zu verschwenken, und der Schieber 4 kann unter den unteren Schenkel 6 des Winkelhebels gleiten. Ist jedoch die Vertiefung 9 der Kassette 1 geöffnet, so wird bei Betätigung des Schiebers 4 über eine bestimmte Reibungskraft, die zwischen Winkelhebel und Schieber gegeben ist, ein Drehmoment auf den Winkelhebel ausgeübt, und dieser schwenkt mit seiner Nase in die Vertiefung der Kassette ein.

Die Figur 2 zeigt den verschwenkten Zustand des Winkelhebels bei geöffneter Vertiefung der Kassette, wobei der Winkelhebel 3 mit seinem unteren Schenkel 6 die weitere Bewegungsmöglichkeit des Schiebers in Pfeilrichtung sperrt.

Aus der Figur 3 ist der Winkelhebel 3 und der teilweise gezeichnete Schieber 4 als Einzelteil ersichtlich. Zur Verstärkung des Drehmoments auf den Winkelhebel 3 bei Betätigung des Schiebers weist der Winkelhebel unterhalb seiner Lagerstelle (Lagerzapfen 11) beidseitig eine nockenförmige Ausbuchtung 13 auf, während der Schieber 4 im Innenbereich des gabelförmigen Endes 14 eine auf beiden Seiten abgeschrägte Erhöhung 15 besitzt. Zur sicheren bedarfsweisen Sperrung des Schiebers weist das mit dem Schieber 4 in Verbindung stehende Schenkelende des Winkelhebels 3 und ein Verbindungssteg 16 im gabelförmigen Teil des Schiebers jeweils eine flächige Anschlagkante 17 und eine Anlaufschräge 18 auf.

Beim Betätigen des Schiebers nach Fig. 1 schiebt sich die Erhöhung 15 im gabelförmigen Ende 14 des Schiebers 4 über die nockenförmige Ausbuchtung 13 am Winkelhebel 3 hinweg, wodurch jegliche bleibende Veränderung einer Grundspannung im gabelförmigen Teil des Schiebers vermieden wird.

# VORRICHTUNG ZUM ABTASTEN EINER KASSETTE

## PATENTANSPRÜCHE

1. Vorrichtung um das unbeabsichtigte Löschen eines in einer Kassette enthaltenen Magnetbandes beim Betreiben in einem Kassettengerät in Abhängigkeit von in der Kassette eingebrachte Vertiefungen zu verhindern, d a d u r c h  g e k e n n - z e i c h n e t , daß ein aus zwei möglichst gleichlangen Schenkeln (5, 6) bestehender Winkelhebel (3) mittig zum Winkelteil (7) im Gerätechassis schwenkbar gelagert ist, und bei dem der eine Schenkel (5) an seinem Ende eine Nase (8) zum Abtasten einer Kassettenvertiefung (9) aufweist, während der andere Schenkel (6) unter leichter Spannung in eine schlitzförmige Öffnung (10) eines im Gerätechassis geführten Schiebers (4) eingreift und durch Verschwenken beim Eintauchen der Nase in die offene Vertiefung der Kassette den Schieber in seiner Längsbewegung sperrt.

2. Vorrichtung nach Anspruch 1, d a d u r c h g e k e n n z e i c h n e t , daß der Winkelhebel im Winkelteil (7) unterhalb des zugeordneten Lagerzapfens (11) beidseitig eine nockenförmige Ausbuchtung (13) aufweist, und das gabelförmige Ende (14) der schlitzförmigen Öffnung (10) des Schiebers beidseitig im Innenbereich eine auf beiden Seiten abgeschrägte Erhöhung (15) besitzt, und die nockenförmige Ausbuchtung (13) des Winkelhebels in Wirkverbindung mit der Erhöhung (15) im Gabelbereich des Schiebers bei dessen Betätigung gelangt.

3. Vorrichtung nach den Ansprüchen 1 und 2, d a d u r c h g e k e n n z e i c h n e t , daß der Winkelhebel und der Schieber aus Kunststoff, insbesondere der Schieber aus elastischem Kunststoff gefertigt ist.

4. Vorrichtung nach den Ansprüchen 1 bis 3, d a d u r c h g e k e n n z e i c h n e t , daß das mit dem Schieber in Verbindung stehende Schenkelende des Winkelhebels und ein Verbindungssteg (16) im gabelförmigen Teil des Schiebers jeweils eine flächige Anschlagkante (17) und eine Anlaufschräge (18) aufweisen.

0175842

FIG.1

FIG.2

FIG.3

**Europäisches Patentamt**

**EUROPÄISCHER RECHERCHENBERICHT**

| | EINSCHLÄGIGE DOKUMENTE | | | EP 85106756.1 |
|---|---|---|---|---|
| Kategorie | Kennzeichnung des Dokuments mit Angabe, soweit erforderlich, der maßgeblichen Teile | | Betrifft Anspruch | KLASSIFIKATION DER ANMELDUNG (Int. Cl 4) |
| X,P | DE - A1 - 3 427 892 (VICTOR)<br>    * Fig. 4,8; Zusammenfassung *<br>    -- | | 1 | G 11 B 15/16 |
| A | GB - A - 1 323 145 (MATSUSHITA)<br>    * Fig. 7; Seite 4, Zeile 61 -<br>    Seite 4, Zeile 77 *<br>    -- | | 1 | |
| A | US - A - 4 106 064 (HOSHIDO)<br>    * Fig. 9,10 *<br>    -- | | 1 | |
| A | DE - B2 - 2 658 603 (SONY)<br>    * Fig. 11 *<br>    -- | | 1 | |
| D,A | DE - A - 2 413 735 (AKAI)<br>    * Fig. 2 *<br>    ---- | | 1 | RECHERCHIERTE SACHGEBIETE (Int. Cl 4)<br><br>G 11 B 15/00 |

Der vorliegende Recherchenbericht wurde für alle Patentansprüche erstellt.

| Recherchenort | Abschlußdatum der Recherche | Prüfer |
|---|---|---|
| WIEN | 03-01-1986 | BERGER |